# EUROPÄISCHE PATENTSCHRIFT

(11) **EP 0 364 910 B1**
(45) Veröffentlichungstag und Bekanntmachung des Hinweises auf die Patenterteilung: **06.10.1993**
(21) Anmeldenummer: 89119126.4
(22) Anmeldetag: 14.10.1989
(51) Int. Cl.: G21C 7/103

(54) **Steuerstab zur Beeinflussung der Reaktivität eines Kernreaktors und Anordnung mehrerer dieser Steuerstäbe zu einem Steuerelement**
Control rod for influencing the reactivity of a nuclear reactor, and arrangement of a plurality of these control rods as a control element
Barre de contrôle pour influencer la réactivité d'un réacteur nucléaire et agencement, de plusieurs de ces barres de contrôle pour former un élément de contrôle

(30) Priorität: 20.10.1988 DE 3835711
(43) Veröffentlichungstag der Anmeldung: 25.04.1990
(73) Patentinhaber: ABB Reaktor GmbH, D-68167 Mannheim (DE)
(72) Erfinder: Hoffmann, Heinz, Dr., D-6141 Einhausen (DE); Grohe, Willi, D-6945 Hirschberg (DE); Skoff, Gerald, Dr.., D-6806 Viernheim (DE)
(74) Vertreter: Rupprecht, Klaus, Dipl.-Ing.

(56) Entgegenhaltungen:
- EP-A- 0 076 201
- EP-A- 0 199 647
- DE-A- 2 900 801
- FR-A- 2 570 213
- FR-A- 2 570 214

## Beschreibung

Die Erfindung betrifft einen Steuerstab zur Beeinflussung der Reaktivität eines Kernreaktors, wobei der Steuerstab aus einem an seinen Enden verschlossenen Hüllrohr besteht, dessen unterer, zuerst in den Reaktorkern einfahrender Bereich, einen Ag-In-Cd-Absorber enthält an den sich ein Bereich mit einem B₄C-Absorber anschließt.

Ein derartiger, allgemein als Hybrid-Stab bezeichneter Steuerstab vermeidet den gefürchteten B-10-Ausbrand am unteren Stabende eines vollständig mit B₄C gefüllten Stabes und reduziert das hohe Gewicht eines Steuerstabes mit vollständiger Ag-In-Cd-Füllung.

Der einer B₄C-Tablettenfüllung eigene Nachteil des Aufreißens einiger Tabletten kann jedoch dazu führen, daß Bruchstücke der Tabletten herunterfallen und den Spalt zwischen dem Ag-In-Cd-Absorber und dem Hüllrohr auffüllen. Es ist dann nicht auszuschließen, daß die große Schwellwirkung des B₄C-Absorbers im Bereich der Ag-In-Cd-Absorberfüllung zu einer unerwünschten Beschädigung des Hüllrohres führt.

Es stellt sich die Aufgabe einen Steuerstab der eingangs genannten Art anzugeben, der ein Eindringen von B₄C-Absorbermaterial in den Ringspalt zwischen Ag-In-Cd-Absorber und Hüllrohr vermeidet und zu einer Kompensierung der thermischen Differenzdehnungen beiträgt.

Gelöst wird diese Aufgabe erfindungsgemäß dadurch, daß der Ag-In-Cd-Absorber von dem B₄C-Absorber durch einen starr mit dem Hüllrohr verbundenen Zwischenstopfen getrennt ist und daß zwischen dem Zwischenstopfen und dem Ag-In-Cd-Absorber ein Leerraum vorgesehen ist.

Damit wird ein Eindringen von B₄C in den Spalt zwischen dem Ag-In-Cd-Absorber und dem Hüllrohr vermieden und durch den Leerraum eine Kompensierung der thermischen Differenzdehnungen erzielt.

Eine bevorzugte Ausbildung sieht vor, daß im Leerraum zwischen Ag-In-Cd-Absorber und Zwischenstopfen eine zylindrische Schraubenfeder angeordnet ist.

Mit dieser Ausbildung wird die thermische und bestrahlungsbedingte Differenz-Längenänderung des Absorbers aufgenommen und eine Stützfunktion des Hüllrohres erzielt. Dabei ist es von Vorteil, die Länge des Leerraumes um die Blocklänge der Schraubenfeder zu vergrößern.

Nach einer anderen Ausgestaltung ist die Verbindung zwischen dem Hüllrohr und dem Zwischenstopfen als Schrumpfpassung ausgebildet.

Diese Befestigungsart ist von Vorteil, da das Einfügen des Zwischenstopfens durch einfache Unterkühlung desselben erfolgt, so daß eine schädliche Wärmeeinwirkung nicht erforderlich ist.

Um die Haftkraft zwischen dem Zwischenstopfen und dem Hüllrohr bei einer Schrumpfverbindung zu erhöhen, wird vorgesehen, daß die Mantelfläche des Zwischenstopfens leicht konkav ausgebildet ist, daß die Schrumpfpassung im Bereich der beiden größten Außendurchmesser des konkav ausgebildeten Zwischenstopfens wirkt und daß das Hüllrohr im Bereich der Stopfenmitte einrolliert wird.

Eine andere Lösung der Aufgabe sieht vor, daß der Ag-In-Cd-Absorber von dem B₄C-Absorber durch einen in axialer Richtung des Hüllrohres bewegbaren Zwischenstopfen getrennt ist.

Der axial bewegbare Stopfen erlaubt einen Ausgleich der Differenzdehnungen und verhindert wegen der geringen Spaltausbildung zum Hüllrohr hin ein Durchtritt von B₄C.

Durch die Verwendung des gleichen Werkstoffes für den Zwischenstopfen und das Hüllrohr kann eine extrem geringe Spaltbreite von 20 bis 30 µm zwischen dem Zwischenstopfen und dem Hüllrohr erzielt werden.

Nach einer weiteren Ausgestaltung weist der Zwischenstopfen wenigstens eine Ringnut auf, wobei in die Ringnut ein Federring eingelegt ist, der mit seiner Außenumfangsfläche eine Reibschlußverbindung mit dem Hüllrohr eingeht.

Mit dieser Ausgestaltung gelingt eine dichte und trotzdem noch gleitende Verbindung, die ebenfalls keinen Leerraum zum Ausgleich der thermischen Dilferenzdehnungen benötigt.

Die Kanten des Schlitzes weisen an der zum B₄C-Absorber hingerichteten Seitenfläche des Federringes einen geringeren Abstand zum B₄C-Absorber auf als diese Seitenfläche.

Dadurch werden die B₄C-Brösel an einem Durchtritt im Bereich des Schlitzes gehindert.

Eine Anordnung mehrerer mit einem Zwischenstopfen und einem Leerraum ausgerüsteter Steuerstäbe zu einem Steuerelement eines Kernreaktors zeichnet sich dadurch aus, daß die Leerräume nebeneinander angeordneter Steuerstäbe in axialer Richtung betrachtet gegeneinander versetzt sind und daß die Steuerstäbe eines Steuerelements mit auf gleicher Höhe angeordneten Leerräumen in symetrischen Kernpositionen eingesetzt sind.

Damit soll eine negative Auswirkung auf die Leistungsverteilung des Brennelementes, in das das Steuerelement eintaucht, vermieden werden.

Anhand verschiedener Ausführungsbeispiele und der schematischen Zeichnungen Figur 1 bis 6 wird ein Steuerstab nach der Erfindung und eine Anordnung mehrere solcher Steuerstäbe zu einem Steuerelement beschrieben.

Dabei zeigt die:
- Figur 1: einen Längsschnitt durch einen Steuerstab mit einem Stopfen zwischen den verschiedenen Absorberbereichen und einem Leerraum unterhalb des Stopfens,
- Figur 2: einen Teilbereich des Steuerstabes nach Figur 1 in einem größeren Maßstab,
- Figur 3: einen Längsschnitt durch einen Steuerstab mit einem Stopfen zwischen den beiden Absorberbereichen,
- Figur 4: einen Teilbereich des Steuerstabes nach Figur 3 in einem größeren Maßstab,
- Figur 4a: eine Aufsicht auf einen Federring nach Figur 4,
- Figur 5: zwei nebeneinander angeordnete Steuerstäbe aus einem Steuerelement und
- Figur 6: eine Aufsicht auf einen Halter zur Aufnahme eines Steuerelementes.

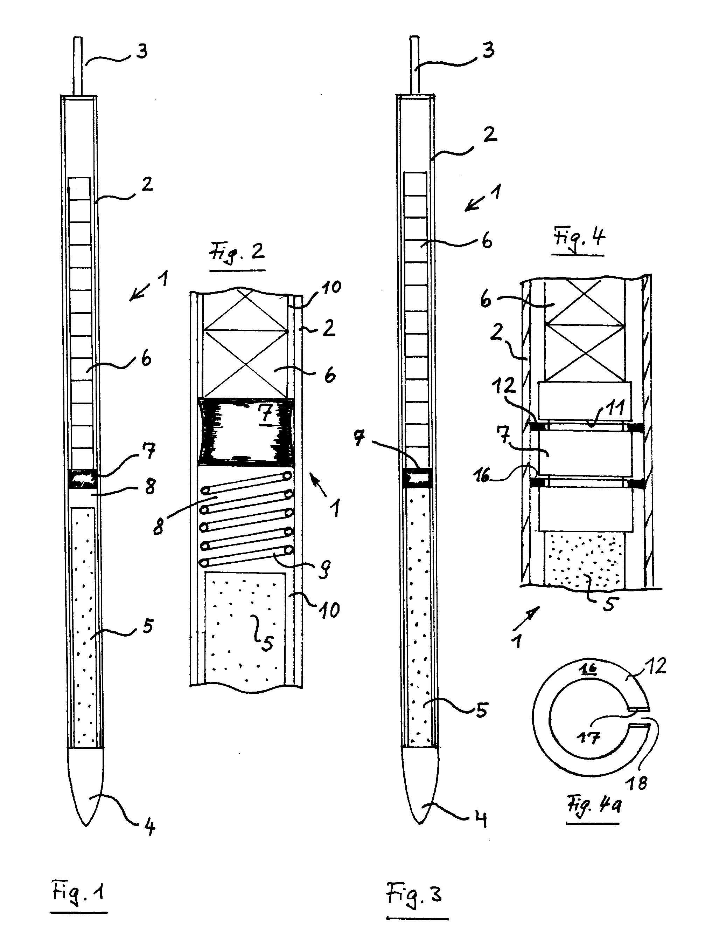

Die Figur 1 zeigt einen Steuerstab 1 im Längsschnitt. Er besteht aus einem an beiden Enden verschlossenen Hüllrohr 2, das an seinem oberen Ende einen Zapfen 3 zur Verbindung mit einem Halteelement aufweist und an seinem unteren Ende mit einer Spitze 4 abgeschlossen ist. In seinem unterem Bereich, der zuerst in den Reaktorkern einfährt, weist das Hüllrohr einen in der Regel stabförmig ausgebildeten Ag-In-Cd-Absorber 5 auf. Zwischen dem Ag-In-Cd-Absorber und der Hüllrohrinnenwand ist ein Spalt vorgesehen, um die Wärmeausdehnung kompensieren zu konnen. Oberhalb des Ag-In-Cd-Absorber ist ein B₄C-Absorber 6 angeordnet. Um ein Eindringen von Bruchstücken der in der Regel in Tablettenform vorliegenden B₄C-Füllung zu vermeiden, sind die beiden Absorberfüllungen durch einen Zwischenstopfen 7 voneinander getrennt. Der Zwischenstopfen 7 besteht aus dem selben Werkstoff wie das Hüllrohr und ist mit dem selben durch Schweißen, Loten, Schrumpfen oder dgl. starr verbunden. Zur Aufnahme der betriebsbedingten thermischen Differenzdehnungen zwischen dem Ag-In-Cd-Absorber und dem Hüllrohr ist unterhalb des Zwischenstopfens 7 ein Leerraum 8 vorgesehen, der sich zwischen den Ag-In-Cd-Absorber 5 und den Zwischenstopfen 7 erstreckt. Die Verbindung zwischen Hüllrohr und Zwischenstopfen muß so ausgebildet sein, daß der Zwischenstopfen einer negativen Bremsbeschleunigung von maximal 20 g während einer Schnellabschaltung standhält. Ist in dem Leerraum eine zylindrische Schraubenfeder 9 untergebracht, so muß die Leerraumlänge um die Blocklänge der Feder vergrößert werden.

Die Figur 2 zeigt ein Beispiel einer stationären Festlegung des Zwischenstopfens 7 im Hüllrohr 2. Der mit einer leicht konkav ausgebildeten Mantelfläche ausgeführte Zwischenstopfen weist an seinen größten Durchmessern ein Schrumpfübermaß auf und wird nach einer Abkühlung in seine Position gebracht. Nach seiner Erwärmung auf die Umgebungstemperatur bildet er eine Schrumpfpassung mit dem Hüllrohr 2. Der Zwischenstopfen 7 weist in seiner Mitte einen um ca. 0,3 mm kleineren Außendurchmesser auf als im Bereich der Schrumpfpassung. Durch eine Einrollierung des Hüllrohres 2 an dieser im Durchmesser reduzierten Stelle des Zwischenstopfens 7 wird die Zuverlässigkeit der Schrumpfpassung erhöht. Die Figur 2 läßt den relativ großen Spalt 10 zwischen den Absorbern und dem Hüllrohr erkennen.

Die Figur 3 zeigt in einer anderen erfindungsgemäßen Lösung einen axial beweglichen Zwischenstopfen 7 zwischen dem Ag-In-Cd-Absorber 5 und dem B₄C-Absorber 6. Bei dieser Ausführung ist ein Leerraum nicht erforderlich, da die thermischen Differenzdehnungen zwischen dem Ag-In-Cd-Absorber und dem B₄C-Absorber durch den axial beweglichen Zwischenstopfen ausgeglichen werden können. Da für den Zwischenstopfen der selbe Werkstoff verwendet wird wie für das Hüllrohr, genügt eine Spaltbreite von 20 bis 30 µm zur Gewährleistung eines für die axiale Bewegbarkeit ausreichenden Spiels.

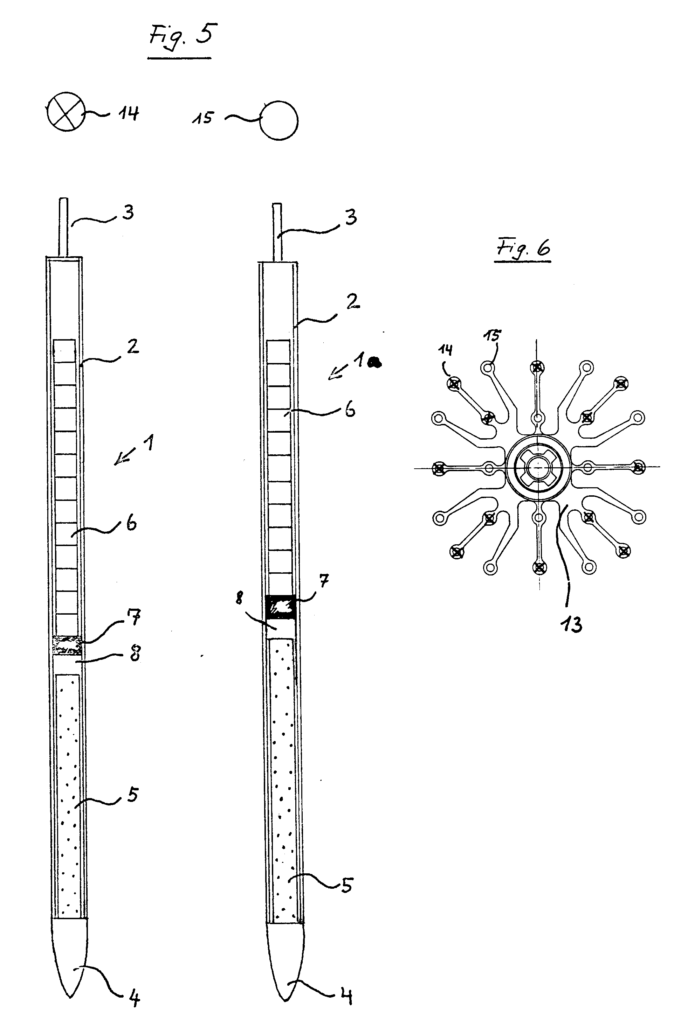

Die Figur 4 zeigt ein anderes Ausführungsbeispiel zur Erzielung einer dichten und trotzdem noch gleitenden Ausbildung des Zwischenstopfens 7. Der Zwischenstopfen ist hierzu mit zwei Ringnuten 11 versehen, die jeweils einen auch in Figur 4a dargestellten Federring 12 aufnehmen. Die Federinge stellen eine Reibschlußverbindung her, die verhindert, daß Bruchstücke des B₄C-Absorbers in den Spalt zwischen dem Ag-In-Cd-Absorber 5 und dem Hüllrohr 2 eindringen.

Ein Schlitz 18 des Federringes 12 ist bei eingesetztem Federring nicht ganz geschlossen. Damit keine auf der Seitenfläche 16 des Federringes 12 aufgefangene B₄C-Brösel in den Schlitz 18 gelangen, sind die dem B₄C-Absorber zugewandten Kanten 17 hochgezogen, so daß sie einen Wulst bilden.

Die Figur 5 zeigt zwei nebeneinander angeordnete Steuerstäbe 1 eines Steuerelementes, wie es in Figur 6 mit dem Haltelement 13 zur Aufnahme einer Vielzahl von Steuerstäben symbolisiert ist. Zur Vermeidung von ungünstigen lokalen Leistungsverteilungen beim Einfahren eines solchen Steuerelementes wird die Position des Leerraumes 8 variiert. So sind die Zwischenstopfen 7 und der Leerraum 8 zweier benachbarter Steuerstäbe 1, 1a um mindestens die Länge eines solchen Zwischenstopfens plus Leerraum versetzt. Die am oberen Ende der Figur 5 angegebene Kennzeichnung 14, 15 wird auch bei der Positionsangabe in Figur 6 verwendet. Daraus wird deutlich, daß Absorberstäbe mit gleicher Lage des Leerraumes 8 in symetrischen Positionen des Steuerelementes angeordnet sind.

## Patentansprüche

1. Steuerstab (1) zur Beeinflussung der Reaktivität eines Kernreaktors, wobei der Steuerstab aus einem an seinen Enden verschlossenen Hüllrohr (2) besteht, dessen unterer, zuerst in den Reaktorkern einfahrbarer Bereich, einen Ag-In-Cd-Absorber (5) enthält, an den sich ein Bereich mit einem B₄C-Absorber (6) anschließt, dadurch gekennzeichnet, daß der Ag-In-Cd-Absorber (5) von dem B₄C-Absorber (6) durch einen starr mit dem Hüllrohr (2) verbundenen Zwischenstopfen (7) getrennt ist und daß zwischen dem Zwischenstopfen (7) und dem Ag-In-Cd-Absorber (5) ein Leerraum (8) vorgesehen ist.

2. Steuerstab nach Anspruch 1, dadurch gekennzeichnet, daß im Leerraum (8) zwischen Ag-In-Cd-Absorber (5) und Zwischenstopfen (7) eine zylindrische Schraubenfeder (9) angeordnet ist.

3. Steuerstab nach Anspruch 1 oder 2, dadurch gekennzeichnet, daß die Verbindung zwischen dem Hüllrohr (2) und dem Zwischenstopfen (7) als Schrumpfpassung ausgebildet ist.

4. Steuerstab nach Anspruch 3, dadurch gekennzeichnet, daß die Mantelfläche des Zwischenstopfens (7) leicht konkav ausgebildet ist, daß die Schrumpfpassung im Bereich des größten Außendurchmessers des konkav ausgebildeten Zwischenstopfens (7) wirkt und daß das Hüllrohr (2) im Bereich der Stopfenmitte einrolliert ist.

5. Steuerstab (1) eines Kernreaktors, wobei der Steuerstab aus einem an seinen Enden verschlossenen Hüllrohr (2) besteht, dessen unterer, zuerst in den Reaktorkern einfahrbarer Bereich, einen Ag-In-Cd-Absorber (5) enthält an den sich ein Bereich mit einem B₄C-Absorber (6) anschließt, dadurch gekennzeichnet, daß der Ag-In-Cd-Absorber (5) von dem B₄C-Absorber (6) durch einen in axialer Richtung des Hüllrohres (2) bewegbaren Zwischenstopfen (7) getrennt ist.

6. Steuerstab nach Anspruch 5, dadurch gekennzeichnet, daß die Spaltbreite zwischen dem Zwischenstopfen (7) und dem Hüllrohr (2) 20 bis 30 µm beträgt.

7. Steuerstab nach Anspruch 5, dadurch gekennzeichnet, daß der Zwischenstopfen (7) wenigstens eine Ringnut (11) aufweist und daß in die Ringnut ein Federring (12) eingelegt ist, der mit seiner Außenumfangsfläche eine Reibschlußverbindung mit dem Hüllrohr (2) eingeht.

8. Steuerstab nach Anspruch 7, dadurch gekennzeichnet, daß an der zum B₄C-Absorber (6) hingerichteten Seitenfläche (16) des Federringes (12) die Kanten (17) eines Schlitzes (18) einen geringeren Abstand zum B₄C-Absorber aufweisen als die Seitenfläche (16).

9. Anordnung mehrerer Steuerstäbe (1) zu einem Steuerelement eines Kernreaktors, wobei jeder Steuerstab in seinem unteren Bereich einen Ag-In-Cd-Absorber (5) und in seinem oberen Bereich einen B₄C-Absorber (6) enthält, wobei die Bereiche durch einen Zwischenstopfen (7) voneinander getrennt sind und wobei zwischen dem Ag-In-Cd-Absorber (5) und dem Zwischenstopfen (7) ein Leerraum (8) vorgesehen ist, nach Anspruch 1, dadurch gekennzeichnet, daß die Leerräume (8) nebeneinander angeordnete Steuerstäbe (1, 1a) in axialer Richtung betrachtet gegeneinander versetzt sind und daß die Steuerstäbe eines Steuerelementes mit gleicher axialer Position der Leerräume (8) in symetrischen Positionen (14, 15) eingesetzt sind.

## Claims

1. Control rod (1) for influencing the reactivity of a nuclear reactor, the control rod comprising a cladding tube (2) whose ends are closed and whose lower section, the one initially insertable into the reactor core, contains an Ag-In-Cd absorber (5) which is adjoined by a section comprising a B₄C absorber (6), characterised in that the Ag-In-Cd absorber (5) is separated from the B₄C absorber (6) by a partition plug (7) which is fixed to the cladding tube (2), and in that a void space (8) is provided between the partition plug (7) and the Ag-In-Cd absorber (5).

2. Control rod according to Claim 1, characterised in that there is disposed, in the void space (8) between the Ag-In-Cd absorber (5) and the partition plug (7), a cylindrical helical spring (9).

3. Control rod according to Claim 1 or 2, characterised in that the join between the cladding tube (2) and the partition plug (7) is designed as a shrink fit.

4. Control rod according to Claim 3, characterised in that the lateral face of the partition plug (7) is designed to be slightly concave, in that the shrink fit is effective in the region of the largest external diameter of the concave partition plug (7), and in that the cladding tube (2) is roller-profiled inwards in the region of the plug centre.

5. Control rod (1) of a nuclear reactor, the control rod comprising a cladding tube (2) whose ends are closed and whose lower section, the one initially insertable into the reactor core, contains an Ag-In-Cd absorber (5) which is adjoined by a section comprising a B₄C absorber (6), characterised in that the Ag-In-Cd absorber (5) is separated from the B₄C absorber (6) by a partition plug (7) which can be moved in the axial direction of the cladding tube (2).

6. Control rod according to Claim 5, characterised in that the width of the gap between the partition plug (7) and the cladding tube (2) is from 20 to 30 µm.

7. Control rod according to Claim 5, characterised in that the partition plug (7) has at least one annular groove (11) and in that the annular groove has a spring washer (12) inserted therein which, via its external perimeter face frictionally locks with the cladding tube (2).

8. Control rod according to Claim 7, characterised in that the edges (17) of a slit (18) at that lateral face (16) of the spring washer (12) which faces the B₄C absorber (6) are at a smaller distance from the B₄C absorber than the lateral face (16).

9. Arrangement of a plurality of control rods (1) to produce a control element of a nuclear reactor, each control rod in its lower section containing an Ag-In-Cd absorber (5) and in its upper section containing a B₄C absorber (6), the sections being separated by a partition plug (7), and a void space (8) being provided between the Ag-In-Cd absorber (5) and the partition plug (7), according to Claim 1, characterised in that the void spaces (8) [lacuna] control rods (1, 1a) disposed next to one another are offset in the axial direction with respect to one another and in that the control rods of a control element having the same axial position of the void spaces (8) are placed in symmetrical positions (14, 15).

## Revendications

1. Barre de commande (1) pour régler la réactivité d'un réacteur nucléaire, dans lequel la barre de commande (1) comprend un tube (2) fermé à ses extrémités et dont la partie inférieure qui s'engage en premier dans le coeur du réacteur comprend un absorbeur Ag-In-Cd (5), auquel fait suite une partie avec un absorbeur B₄C (6), caractérisée en ce que l'absorbeur Ag-In-Cd (5) est séparé de l'absorbeur B₄C (6) par un bouchon intermédiaire (7) relié rigidement au tube et en ce qu'il est prévu un espace vide (8) entre le bouchon intermédiaire (7) et l'absorbeur Ag-In-Cd (5).

2. Barre de commande selon la revendication 1, caractérisée en ce qu'un ressort hélicoïdal (9) est prévu dans l'espace vide (8) entre l'absorbeur Ag-In-Cd (5) et le bouchon intermédiaire (7).

3. Barre de commande selon la revendication 1 ou 2, caractérisée en ce que la liaison entre le tube (2) et le bouchon intermédiaire (7) est réalisée par retrait du tube.

4. Barre de commande selon la revendication 3, caractérisée en ce que la surface externe du bouchon intermédiaire (7) est légèrement concave, que la liaison par retrait s'opère au niveau du plus grand diamètre externe du bouchon intermédiaire (7) prévu concave et que le tube (2) est rétreint par roulage au niveau du milieu de la longueur du bouchon (7).

5. Barre de commande (1) d'un réacteur nucléaire, dans lequel la barre de commande (1) comprend un tube (2) fermé à ses extrémités et dont la partie inférieure qui s'engage en premier dans le coeur du réacteur comporte un absorbeur Ag-In-Cd (5), auquel fait suite une partie avec un absorbeur B₄C (6), caractérisée en ce que l'absorbeur Ag-In-Cd (5) est séparé de l'absorbeur B₄C (6) par un bouchon intermédiaire (7) mobile dans la direction axiale du tube (2).

6. Barre de commande selon la revendication 5, caractérisée en ce que l'espace entre le bouchon intermédiaire (7) et le tube (2) fait 20 à 30 µm.

7. Barre de commande selon la revendication 5, caractérisée en ce que le bouchon intermédiaire (7) comporte au moins une rainure (11) et qu'un jonc (12) qui, par sa surface extérieure, forme une liaison en frottement avec le tube (2), est disposé dans la rainure (11).

8. Barre de commande selon la revendication 7, caractérisée en ce que, au niveau de la surface latérale (16) du jonc (12) tournée vers l'absorbeur B₄C (6), la distance entre les bords (17) d'une fente (18) et l'absorbeur B₄C (6) est inférieure à la distance entre ledit absorbeur et la surface latérale (16).

9. Agencement de plusieurs barres de commande (1) d'un élément de commande d'un réacteur nucléaire, dans lequel chaque barre de commande (1) présente dans sa partie inférieure un absorbeur Ag-In-Cd (5) et dans sa partie supérieure un absorbeur B₄C (6), dans lequel ces parties sont séparées l'une de l'autre par un bouchon intermédiaire (7) et dans lequel un espace vide (8) est prévu entre l'absorbeur Ag-In-Cd (5) et le bouchon intermédiaire (7), selon la revendication 1, caractérisé en ce que les espaces vides (8) de barres de commande (1, 1a) disposées les unes à côté des autres sont décalés les uns par rapport aux autres dans la direction axiale et en ce que les barres de commande d'un élément de commande ayant la même position axiale des espaces vides (8) sont installées dans des positions symétriques (14, 15).
